# EUROPÄISCHE PATENTSCHRIFT

(11) **EP 2 796 840 B1**
(45) Veröffentlichungstag und Bekanntmachung des Hinweises auf die Patenterteilung: **06.06.2018**
(21) Anmeldenummer: 13165221.6
(22) Anmeldetag: 24.04.2013
(51) Int. Cl.: H01P 1/16, H01P 5/08, H01P 11/00, G01F 23/284, H01P 1/163

(54) **Modenkonverter für Füllstandsradar**
Mode converter for fill level radar
Convertisseur de modes pour un radar de niveau de remplissage

(43) Veröffentlichungstag der Anmeldung: 29.10.2014
(73) Patentinhaber: VEGA Grieshaber KG, 77709 Wolfach (DE)
(72) Erfinder: Schultheiss, Daniel, 78132 Hornberg (DE); Kienzle, Klaus, 77736 Zell am Harmersbach (DE); Janson, Malgorzata, 76297 Stutensee (DE)
(74) Vertreter: Maiwald Patent- und Rechtsanwaltsgesellschaft mbH

(56) Entgegenhaltungen:
- EP-A1- 0 162 821
- US-A1- 2012 169 527

## Beschreibung

### GEBIET DER ERFINDUNG

Die Erfindung betrifft das Gebiet der Füllstandsmessung mithilfe von Radar. Insbesondere betrifft die Erfindung einen Modenkonverter für ein Füllstandsradar, ein Füllstandsradar, einen Konverterkörper für einen Modenkonverter und ein Verfahren zum Herstellen eines Konverterkörpers.

### HINTERGRUND DER ERFINDUNG

Die Füllstandsmessung mittels Radar basiert auf einer Abstandsmessung, bei der die Laufzeit eines Radarsignals bzw. Hochfrequenzsignals zu einer Oberfläche eines Füllguts in einem Behälter ermittelt und daraus der Abstand der Abstrahlvorrichtung des Radargeräts, beispielsweise eines Antennenhorns, zum Füllgut abgeleitet wird.

Normalerweise wird bei Radargeräten der sogenannte Grundmode des Radarsignals angeregt. Bei einem Rundhohlleiter ist dies der H11-Mode (der auch TEll-Mode genannt wird). Sobald der Hohlleiter bzw. der Rohrdurchmesser größer als der Eindeutigkeitsbereich wird, werden mit zunehmendem Durchmesser immer mehr Moden ausbreitungsfähig. Bei einem Rohrdurchmesser von 82,5 mm sind bei einer Frequenz von 25 GHz beispielsweise 233 Moden ausbreitungsfähig.

Insbesondere bei der Füllstandsmessung in Standrohren oder Bypass-Leitungen kann es durch den Einfluss von Flanschverbindungen, Rohrabgängen und Durchmischungsöffnungen, wie etwa Löcher oder Schlitze, zu einer Reduzierung der Messgenauigkeit kommen, da die unterschiedlichen Moden unterschiedlich stark an solchen Störstellen reflektiert werden.

Durch die unterschiedlichen Ausbreitungsgeschwindigkeiten der verschiedenen Moden kann es zu Dispersion kommen, d.h. durch die unterschiedlichen Laufzeiten werden sehr viele, zeitlich verschiedene Echos vom gleichen Füllstand erzeugt. Durch konstruktive und destruktive Überlagerungen kommt es zusätzlich zu Amplitudenschwankungen, welche auch Messungenauigkeiten zur Folge haben können.
US 2012/0169527 A1 beschreibt einen Hochfrequenzmodengenerator für ein Radar-Füllstandmessgerät, der eine Radarlinse aufweist, die auf einer flachen Seite spiralförmig angeordnete Leiter aufweist.

EP 0 162 821 A1 beschreibt ein Füllstandmessgerät, dessen Reflektor eine Plastikplatte aufweist, die spiralförmige Leiter umfasst.

### ZUSAMMENFASSUNG DER ERFINDUNG

Es ist Aufgabe der Erfindung, die Messgenauigkeit eines Füllstandsradars zu verbessern.

Diese Aufgabe wird durch den Gegenstand der unabhängigen Ansprüche gelöst. Weitere Ausführungsformen der Erfindung ergeben sich aus den abhängigen Ansprüchen und aus der folgenden Beschreibung.

Ein Aspekt der Erfindung betrifft einen Modenkonverter für ein Füllstandsradar, der dazu ausgeführt ist, eine TEM-Leitungswelle in einen H01-Mode umzuwandeln. Der Modenkonverter kann an einem Behälter angebracht werden, in dem ein Füllstand gemessen werden soll, beispielsweise an einer Bypass-Leitung oder einem Standrohr.

Gemäß einer Ausführungsform der Erfindung umfasst der Modenkonverter eine Eingangsleitung zum Einleiten eines Hochfrequenzsignals in den Modenkonverter; eine Helixstruktur, in die ein Leiter der Eingangsleitung hineinragt und die eine Mehrzahl von helixförmigen elektrischen Leitern aufweist; und einen Hohlleiter, der die Helixstruktur umgibt. Die Helixstruktur ist dazu ausgeführt, das Hochfrequenzsignal aus der Eingangsleitung, beispielsweise eine TEM-Leitungswelle, in einen H01-Mode im Hohlleiter umzuwandeln. Es ist zu verstehen, dass der Modenkonverter auch umgekehrt ein H01-Signal in ein Hochfrequenzsignal in der Eingangsleitung umwandeln kann.

Über ein Kabel, das beispielsweise mit einer Steuerung d.h. dem Hochfrequenzteil des Füllstandsradars verbunden ist, kann das Hochfrequenzsignal in die Eingangsleitung eingebracht werden, wird von dem Modenkonverter in den H01-Mode umgewandelt und dann in ein Stand- oder Bypass-Rohr eingekoppelt. Ein vom Füllgut reflektiertes Hochfrequenzsignal wird vom Modenkonverter zurück in eine TEM-Leitungswelle umgewandelt und in das Kabel bzw. die Eingangsleitung zurückgeführt, wo es dann im Hochfrequenzteil weiterverarbeitet und ausgewertet werden kann.

Der H01-Mode (bzw. HO1-Wellentyp) ist der einzige Mode (außer den höhermodigen H02-...H0n-Moden), der keine Anteile des elektrischen Felds am Rand (bzw. Innenseite) und in der Mitte eines Hohlleiters besitzt. Breitet sich eine H01-Mode durch ein Rohr aus (beispielsweise einem Standrohr), fließen also keine Längsströme im Rohr, welche durch Schlitze, Löcher, Abgänge oder Rohrverbindungen unterbrochen werden könnten. Der H01-Mode braucht zwar in der Regel eine Berandung, um sich ausbreiten zu können, wird aber durch eine Nichtidealität der Berandung nur wenig beeinflusst.
Damit kann mit dem Modenkonverter der Einfluss von Flanschverbindungen, Rohrabgängen und Durchmischungsöffnungen, insbesondere bei Standrohr- und Bypass-Anwendungen, reduziert werden. Somit kann eine bessere Messgenauigkeit erzielt werden.
Ein weiterer Vorteil des H01-Modes sind dessen geringe Verluste. Der H1-Mode hat von allen Hohlleiterwellen die geringste Dämpfung.

Die Eingangsleitung ist eine Koaxialleitung mit einem Innenleiter und einem elektrisch leitenden Mantel sein. Über den Innenleiter kann das Hochfrequenzsignal in den Modenkonverter eingekoppelt und das reflektierte Signal ausgekoppelt werden kann. Der Innenleiter ragt dabei in die Helixstruktur hinein. Der Mantel bzw. der Außenleiter der Koaxialleitung kann mit einer metallischen Antennenstruktur verbunden sein, beispielsweise einem Gehäuse, in das den Hohlleiter bereitstellt, in dem die Helixstruktur angeordnet ist. Die Helixstruktur ist weder mit dem Innenleiter noch mit dem Außenleiter verbunden.

Die Helixstruktur, die beispielsweise in der Form eines Zylinders ausgeführt ist, umfasst eine Mehrzahl von helixförmigen bzw. wendelförmigen elektrischen Leitern, die beispielsweise als Leiterstreifen ausgeführt sind. Die elektrischen Leiter können symmetrisch zu einer Mittelachse der Helixstruktur angeordnet sein und die Mittelachse wendelförmig umlaufen. Durch die wendelförmige Struktur wird hauptsächlich nur die H01-Mode angeregt und alle anderen ausbreitungsfähigen Moden bestmöglich unterdrückt.

Die Anzahl der Abstände, die Länge, der Winkel, die Breite und die Stärke der elektrischen Leiter bzw. Leiterstreifen beeinflussen das Transmissionsverhalten und Wandelverhalten der Helixstruktur. Die elektrischen Leiter müssen vor allem leitfähig sein, müssen aber nicht miteinander verbunden sein.

Der Hohlleiter des Modenkonverters, beispielsweise ein Rundhohlleiter, umgibt die Helixstruktur mit Abstand, so dass beispielsweise zwischen der Helixstruktur und der Innenseite des Hohlleiters ein mit Luft oder einem dielektrischen Medium gefüllter Bereich entsteht, so dass sich dort das elektrische Feld des H01-Modes ausbilden kann.

Gemäß einer Ausführungsform der Erfindung ragt der Leiter der Eingangsleitung um mehr als 10%, mehr als 40% oder mehr als die Hälfte der Länge der Helixstruktur in die Helixstruktur hinein. Auf diese Weise kann eine TEM-Leitungswelle aus der Eingangsleitung in das Innere der Helixstruktur abgestrahlt werden und anschließend im Abschnitt des Hohlleiters, in dem die Helixstruktur angebracht ist, zu dem H01-Mode umgewandelt werden.

Gemäß einer Ausführungsform der Erfindung ist der Leiter der Eingangsleitung ein Innenleiter eines Koaxialkabels bzw. mit dem Innenleiter eines Koaxialkabels verbunden. Der Modenkonverter kann beispielsweise einen Stecker aufweisen, in das das Ende eines Koaxialkabels eingeschraubt oder eingesteckt werden kann.

Gemäß einer Ausführungsform der Erfindung ist der Hohlleiter durch ein Gehäuse des Füllstandsradars gebildet. Dieses Gehäuse kann einen Deckel umfassen, durch den der Leiter der Eingangsleitung in den Hohlleiter ragt. Beispielsweise kann ein Stecker für ein Koaxialkabel an dem Deckel angebracht sein. Weiter kann das Gehäuse eine Öffnung aufweisen, an der ein Antennenhorn für ein Füllstandsradar befestigt werden kann.

Gemäß einer Ausführungsform der Erfindung wird die Helixstruktur von einem dielektrischen Körper getragen, der im Hohlleiter angeordnet ist (und der weiter unten auch Konverterkörper genannt wird). Die Helixstruktur und der dielektrische Körper können einen Konverterkörper bilden, der einerseits die Helixstruktur trägt und andererseits an dem Gehäuse des Modenkonverters befestigt ist. Beispielsweise kann der Konverterkörper durch die oben genannte Öffnung im Gehäuse ragen und derart geformt sein, dass er mittels des Antennenhorns im Gehäuse gehalten wird. Auf diese Weise dichtet der Konverterkörper das Innere (d.h. den Hohlleiter) des Modenkonverters gegenüber dem Behälter ab, in dem der Füllstand gemessen werden soll, und leitet das in den H01-Mode umgewandelte Hochfrequenzsignal in beispielsweise in ein Stand- oder Bypass-Rohr ein.

Gemäß einer Ausführungsform der Erfindung trägt der dielektrische Körper die Helixstruktur an seiner Außenseite. Der dielektrische Körper, der beispielsweise aus Kunststoff ist, kann beispielsweise einen zylinderförmigen Abschnitt aufweisen, an dessen Außenseite die Helixstruktur angebracht ist. Es ist aber auch möglich, dass der dielektrische Körper hohl ist und die Helixstruktur an seiner Innenseite angebracht ist. Bei dem dielektrischen Material des dielektrischen Körpers kann es sich beispielsweise um PP, PTFE, PEEK (Polyetheretherketon), Glas oder Keramik handeln.

Die Begriffe "Zylinder" und "zylinderförmiger Abschnitt" können so verstanden werden, dass die betreffenden Bauteile im Wesentlichen zylinderförmig sind. Beispielsweise können diese Bauteile (herstellungsbedingt) leicht konisch ausgeführt sein und Außen- bzw. Innenflächen aufweisen, die in etwa um 1° bis 2° schräg zur Mittelachse der Bauteile verlaufen.

Ein weiterer Aspekt der Erfindung betrifft ein Füllstandsradar mit einem Modenkonverter, so wie er obenstehend und untenstehend beschrieben ist. Das Füllstandsradar kann beispielsweise neben dem Modenkonverter eine Steuerung umfassen, die entweder direkt am Modenkonverter oder entfernt dazu angebracht ist und die das Hochfrequenzsignal erzeugen sowie ein reflektiertes Hochfrequenzsignal auswerten kann. Die Steuerung kann über ein Koaxialkabel mit dem Modenkonverter verbunden sein.

Ein weiterer Aspekt der Erfindung betrifft einen Konverterkörper für einen Modenkonverter, so wie er obenstehend und untenstehend beschrieben ist. Der Konverterkörper kann in ein Gehäuse des Modenkonverters eingebracht werden, das gleichzeitig einen Hohlleiter bildet, in dem eine am Konverterkörper angebrachte Helixstruktur aufgenommen ist.

Gemäß einer Ausführungsform der Erfindung umfasst der Konverterkörper eine Helixstruktur aus einer Mehrzahl von helixförmigen elektrischen Leitern; einen dielektrischen Körper mit einem zylinderförmigen Abschnitt, der von der Helixstruktur umgeben ist; und eine Aufnahme im zylinderförmigen Abschnitt zur Aufnahme eines Leiters einer Eingangsleitung. Die Aufnahme kann eine (eventuell axiale) Bohrung bzw. Öffnung entlang einer Achse des zylinderförmigen Abschnitts sein, in die der Leiter eingesteckt werden kann.

Der dielektrische Köper kann mit seinem ersten Abschnitt zum Tragen der Helixstruktur dienen und kann dort eine axiale Öffnung aufweisen, in die beispielsweise der Innenleiter eines Koaxialkabels eingeführt werden kann.

Gemäß einer Ausführungsform der Erfindung umfasst der Konverterkörper weiter einen zweiten zylinderförmigen Abschnitt zum Abdichten eines Gehäuses, in das der erste zylinderförmige Abschnitt mit der Helixstruktur aufgenommen ist. Der zweite Abschnitt kann einen größeren Durchmesser als der erste zylinderförmige Abschnitt aufweisen. Der zweite zylinderförmige Abschnitt kann an seiner Außenseite eine oder mehrere Vertiefungen aufweisen, in denen ein oder mehrere Dichtringe aufgenommen werden können.

Gemäß einer Ausführungsform der Erfindung umfasst der Konverterkörper weiter einen konischen Abschnitt zwischen dem ersten Abschnitt und dem zweiten Abschnitt zum Abstützen des Konverterkörpers am Gehäuse. Die Öffnung im Gehäuse, aus der der Konverterkörper aus dem Gehäuse ragt, kann eine entsprechende konische Innenfläche aufweisen.

Gemäß einer Ausführungsform der Erfindung umfasst der Konverterkörper weiter einen Abstrahlkegel, der derart an den zweiten zylinderförmigen Abschnitt anschließt, dass am zweiten zylinderförmigen Abschnitt ein Absatz gebildet ist, mit dem der Konverterkörper im Gehäuse fixierbar ist. Beispielsweise kann über der Öffnung im Gehäuse ein Antennenhorn befestigt werden, das einen Flansch aufweist, der einen kleineren Innendurchmesser aufweist als die Öffnung und auf dem der Absatz am zweiten zylinderförmigen Abschnitt abgestützt werden kann.

Ein weiterer Aspekt der Erfindung betrifft einen Konverterkörper für einen Modenkonverter, beispielsweise so wie er obenstehend und untenstehend beschrieben ist. Es ist zu verstehen, dass Merkmale des Verfahrens auch Merkmale des Konverterkörpers sein können und umgekehrt auch Merkmale des Konverterkörpers oder des Modenkonverters Merkmale des Verfahrens sein können.

Gemäß einer Ausführungsform der Erfindung umfasst das Verfahren die Schritte von: Bereitstellen eines Trägerkörpers; und Aufbringen einer Helixstruktur auf den Trägerkörper durch Metallisierung einer Mehrzahl von helixförmigen Streifen auf der Außenseite des Trägerkörpers. Dies kann beispielsweise mithilfe eines Herstellungsverfahren der 3D-MID-Technologie (MID = Molded Interconnect Devices, also räumlich spritzgegossene Schaltungsträger) geschehen.

Auch ist es möglich, die Helixstruktur auf eine dünne Folie (beispielsweise aus Polyimid) aufzubringen. Die Folie mit der aufgebrachten Struktur kann einfach um den Trägerkörper gewickelt bzw. aufgeklebt werden.

Gemäß einer Ausführungsform der Erfindung ist der Trägerkörper aus einem Kunststoffmaterial gefertigt, das für eine Metallisierung mittels eines Laser-Direkt-Strukturierungsverfahrens (LDS-Verfahren) geeignet ist und/oder die Helixstruktur kann mittels des LDS-Verfahrens auf den Trägerkörper aufgebracht werden. Das Material kann beispielsweise "TECACOMP PEEK LDS" © der Firma Ensinger sein.

Ein LDS-geeignetes Material kann ein Metalloxidadditiv enthalten, das mittels eines Laserstrahls aktiviert werden kann. An Stellen, an denen ein Laserstrahl das Material des Trägerkörpers aktiviert, bilden sich dann Keime, an denen eine Metallisierung in einem Bad abgeschieden werden kann. Mit einem Laserstrahl kann damit die Helixstruktur auf dem Trägerkörper angelegt werden.

Gemäß einer Ausführungsform der Erfindung ist der gesamte Konverterkörper aus dem Kunststoffmaterial gefertigt. Insbesondere kann der Kunststoff des gesamten Konverterkörpers einstückig ausgeführt sein und/oder kann der gesamte Konverterkörper aus einem LDS-geeigneten Kunststoff bestehen.

Es ist aber auch möglich, dass der Konverterkörper mehrstückig gefertigt wird.

Gemäß einer Ausführungsform der Erfindung umfasst das Verfahren weiter den Schritt von: Anbringen des Trägerkörpers an einem weiteren Kunststoffkörper, so dass der Trägerkörper einen ersten Abschnitt des Konverterkörpers bildet, auf dem die Helixstruktur aufgebracht ist, und der weitere Kunststoffkörper wenigstens einen zweiten Abschnitt bildet, mit dem der Konverterkörper an einem Gehäuse befestigbar ist.

Der weitere, zweite Kunststoffkörper kann aus einem weiteren, zweiten Kunststoffmaterial gefertigt sein, das beispielsweise geeignetere dielektrische Eigenschaften aufweist als das Kunststoffmaterial des Trägerkörpers und/oder das beispielsweise aufgrund seiner Beständigkeit dazu geeignet ist, dem eventuell aggressiven Inhalt des Behälters, in dem der Füllstand gemessen wird, standzuhalten.

Insgesamt können die dielektrischen Eigenschaften des Konverterkörpers durch den Trägerkörper und den zweiten Kunststoffkörper bestimmt werden.

Gemäß einer Ausführungsform der Erfindung ist der Trägerkörper ein Vollzylinder, so dass der Konverterkörper im ersten Abschnitt im Inneren der Helixstruktur lediglich das Kunststoffmaterial des Trägerkörpers aufweist. Der Vollzylinder kann beispielsweise ein Gewinde aufweisen, das in ein entsprechendes Gewinde des weiteren Kunststoffkörpers geschraubt werden kann. Es ist zu verstehen, dass in der vorliegenden Anmeldung unter einem Zylinder immer ein Vollzylinder verstanden werden kann.

Gemäß einer Ausführungsform der Erfindung ist der Trägerkörper zumindest teilweise ein Hohlzylinder. Der Trägerkörper kann dadurch an dem weiteren Kunststoffkörper angebracht werden, dass er auf den weiteren Kunststoffkörper geschoben wird. In diesem Fall kann der Konverterkörper (zumindest teilweise) im ersten Abschnitt aus einem Kern mit dem Kunststoffmaterial des weiteren Kunststoffkörpers gebildet sein, der von dem Hohlzylinder des Trägerkörpers umgeben ist.

Im Folgenden werden Ausführungsbeispiele der Erfindung mit Bezug auf die beiliegenden Figuren detailliert beschrieben.

### KURZE BESCHREIBUNG DER FIGUREN

Fig. 1 zeigt schematisch einen Behälter mit einem Füllstandsradar gemäß einer Ausführungsform der Erfindung.
Fig. 2 zeigt einen Längsschnitt durch einen Modenkonverter gemäß einer Ausführungsform der Erfindung.
Fig. 3 zeigt eine dreidimensionale Ansicht eines Modenkonverters gemäß einer Ausführungsform der Erfindung.
Fig. 4 zeigt eine dreidimensionale Ansicht eines Konverterkörpers gemäß einer Ausführungsform der Erfindung.
Fig. 5 zeigt einen Längsschnitt durch einen Konverterkörper gemäß einer Ausführungsform der Erfindung.
Fig. 6 zeigt einen Längsschnitt durch einen Konverterkörper gemäß einer Ausführungsform der Erfindung.
Fig. 7 zeigt einen Längsschnitt durch einen Konverterkörper gemäß einer Ausführungsform der Erfindung.
Fig. 8 zeigt ein Flussdiagramm für ein Verfahren zum Herstellen eines Konverterkörpers gemäß einer Ausführungsform der Erfindung.

Grundsätzlich sind identische oder ähnliche Teile mit den gleichen Bezugszeichen versehen.

### DETAILLIERTE BESCHREIBUNG VON AUSFÜHRUNGSBEISPIELEN

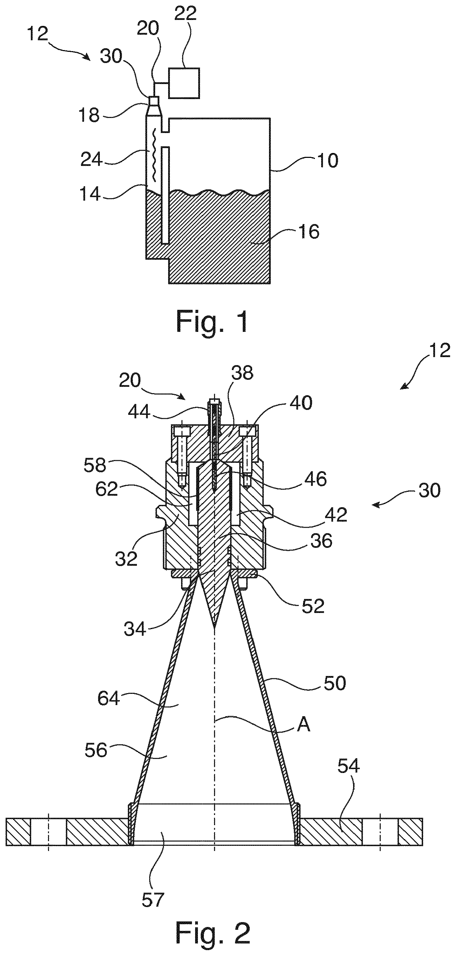

Fig. 1 zeigt einen Behälter 10 mit einem Füllstandsradar 12, das den Füllstand in dem Behälter misst. Das Füllstandsradar 12 ist am oberen Ende einer Bypassleitung 14 angebracht, in der eine Flüssigkeit 16 genauso hoch wie im Inneren des Behälters 10 steht.

Das Füllstandsradar 12 umfasst eine Abstrahlvorrichtung 18, die über eine Koaxialleitung 20 mit einer Steuerung 22 des Füllstandsradars 12 verbunden ist. Es ist möglich, dass die Steuerung 22 direkt an der Abstrahlvorrichtung 18 angebracht ist oder sich entfernt davon befindet.

Zum Messen des Abstands der Abstrahlvorrichtung 18 von der Oberfläche der Flüssigkeit 16 erzeugt die Steuerung 22 Pulse eines Hochfrequenzsignals, die über die Koaxialleitung 20 an die Abstrahlvorrichtung 18 übermittelt werden. Die Abstrahlvorrichtung 18 strahlt Pulse des Hochfrequenzsignals als Radarpulse 24 in die Bypassleitung 14, die dann an der Oberfläche der Flüssigkeit zurückreflektiert werden und wieder von der Abstrahlvorrichtung 18 empfangen werden. Die reflektierten Radarpulse werden von der Abstrahlvorrichtung 18 als reflektiertes Hochfrequenzsignal in der Koaxialleitung 20 eingespeist und an die Steuerung 22 zurückübertragen. Die Steuerung 22 ermittelt aus Laufzeitdifferenzen der Pulse dann den Abstand. Es ist aber auch möglich, dass der Abstand mittels eines anderen Verfahrens, wie beispielsweise FMCW ermittelt wird. Bei einem FMCW-Verfahren wird der Abstand über die Frequenzverschiebung zwischen gesendetem und empfangenem Signal ermittelt.

Das Hochfrequenzsignal wird in der Koaxialleitung 20 als TEM-Leitungswelle übertragen. Die Abstrahlvorrichtung 18 umfasst einen Modenkonverter 30, der dazu ausgeführt ist, die TEM-Leitungswelle in den HO1-Mode eines Hohlleiters umzuwandeln, der dann als Radarsignal abgestrahlt wird. Umgekehrt kann der Modenkonverter 30 beim Empfangen das reflektierte Signal des H01-Modes in eine TEM-Leitungswelle zurückverwandeln.

Da der H01-Mode am Rand des Bypassrohrs 14, das in der Regel aus Metall ist und das einen Hohlleiter für das Radarsignal darstellt, keine Anteile des elektrischen Feldes aufweist, fließen keine Längsströme im Bypassrohr 14, die durch Störungen im Bypassrohr 14 (wie etwa Schlitze oder Öffnungen) gestört werden könnten. Somit wird der HO1-Mode durch diese Störungen nicht oder nur schwach gestört, was die Signalqualität des reflektierten Hochfrequenzsignals erhöht.

Die Fig. 2 zeigt eine Abstrahlvorrichtung 12 und insbesondere einen Modenkonverter 30 detaillierter. Der Modenkonverter 30 umfasst ein Gehäuse 32, das an seinem einen Ende eine Öffnung 34 aufweist, durch die ein Konverterkörper 36 in das Gehäuse 32 eingesteckt ist. An seinem anderen Ende ist das Gehäuse 32 mit einem Deckel 38 verschlossen, der beispielsweise auf das Gehäuse 32 geschraubt ist.

Der Deckel 38 weist eine Öffnung 40 bzw. eine Bohrung 40 auf, durch die die Koaxialleitung 20 in den Innenraum 42 des Gehäuses 32 geführt ist. In der Bohrung 40 kann beispielsweise ein Stecker 44, wie etwa ein 3,5 mm Stecker, angebracht sein, an dem ein Kabel für die Koaxialleitung 20 angeschlossen werden kann. Der Innenleiter 46 der Koaxialleitung 20 ragt in den Innenraum 44 des Gehäuses 38 und in den Konverterkörper 36 hinein. Der Konverterkörper 36 weist dazu eine Aufnahme 48 für den Innenleiter 46 auf. Der Innenleiter 46 kann als Eingangsleiter des Modenkonverters 30 aufgefasst werden.

Das Gehäuse 32, der Deckel 38 und der Konverterkörper 36 sind im Wesentlichen rotationssymmetrisch bezüglich einer Achse A. Die Bohrung 40 im Deckel 38, der Stecker 44, die gegenüberliegende Öffnung 34 im Gehäuse 32 sind entlang der Achse A angeordnet.

Der Innenraum 42 des Gehäuses 32 ist zylinderförmig (wobei die Zylinderachse mit der Achse A übereinstimmt), so dass im Inneren des Gehäuses 32 ein Rundhohlleiter gebildet ist, in dem der Konverterkörper 36 (bzw. dessen vorderer Abschnitt) und der Innenleiter 46 angeordnet sind.

An dem Ende des Gehäuses 32 mit der Öffnung 34 ist ein Antennenhorn 50 angebracht, das an seinem einen Ende einen ersten Flansch 52 zum Befestigen am Gehäuse 32 und an seinem anderen Ende einen zweiten Flansch 54 zum Befestigen an einem Behälter 10 (beispielsweise an der Bypassleitung 14) aufweist. Das Antennenhorn 50 kann mittels des Flansches 52 an dem Gehäuse 32 angeschraubt sein.

Das Antennenhorn 50 umfasst einen konischen Abschnitt 56, der sich von einem Durchmesser, der etwas kleiner ist als der Außendurchmesser der Öffnung 34, nach außen hin zu einer Außenöffnung 57 aufweitet. Das Antennenhorn 50 kann an der offenen Seite bzw. mit der Außenöffnung 57 an einen gewünschten Rohrdurchmesser (beispielsweise der Bypassleitung 14) angepasst sein bzw. den gleichen Durchmesser wie die Bypassleitung 14 aufweisen. Der Rohrdurchmesser kann 82,5 mm betragen.

Auch das Antennenhorn 50 kann rotationssymmetrisch zur Achse A sein.

Auf dem Konverterkörper 36 befindet sich eine Helixstruktur 58, die dazu ausgeführt ist, eine TEM-Leitungswelle aus dem Koaxialkabel 20 und eine H01-Mode im Hohlleiter ineinander umzuwandeln.

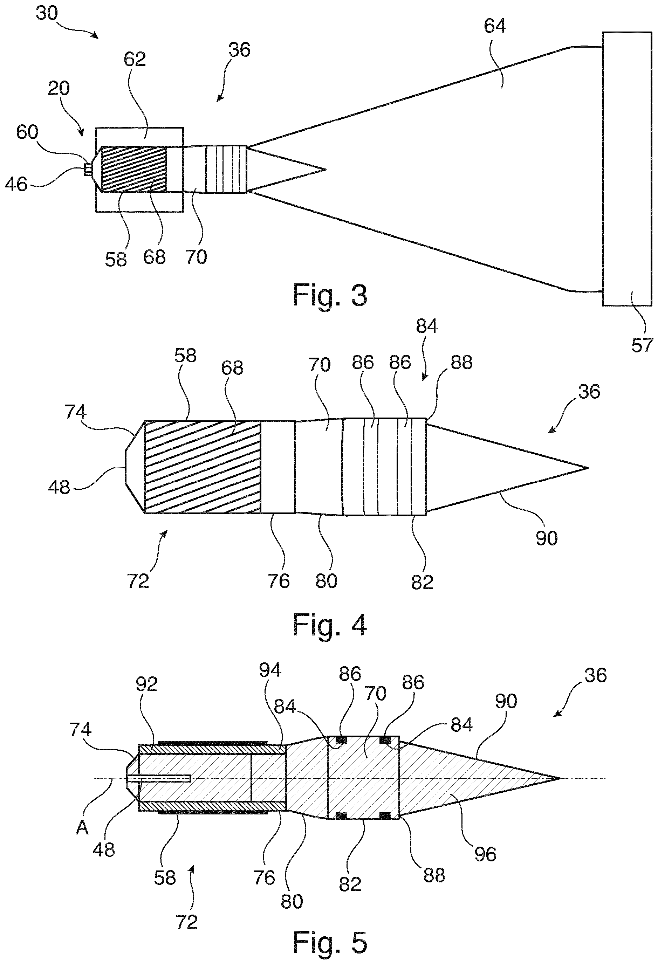

Die Fig. 3 zeigt den Konverterkörper 36 mit der Helixstruktur 58 und die Volumen 60, 62, 64, in denen das Hochfrequenzsignal geführt ist, detaillierter in einer dreidimensionalen Darstellung. Das Volumen 60 ist der Raum zwischen dem Mantel des Koaxialkabels 20 und dem Innenleiter 46, durch den die TEM-Leitungswelle in den Modenkonverter 30 eintritt (bzw. ihn verlässt). Das Volumen 60 kann beispielsweise mit einem dielektrischen Kunststoffmaterial gefüllt sein.

Das Volumen 62 ist ein Luftbereich zwischen dem Konverterkörper 36 bzw. zwischen der Helixstruktur 58 und der Innenfläche des Gehäuses 32 bzw. des Hohlleiters. In dem Volumen 62 kann sich das elektrische Feld ausbilden, das zum H01-Mode umgewandelt wird.

Das Volumen 64 ist der Innenraum des Antennenhorns 50, mit dem das Radarsignal in den Behälter 10 bzw. in die Bypassleitung 14 gerichtet wird bzw. mit dem das reflektierte Signal gebündelt und in den Hohlleiter zurückgeleitet wird.

Eine Vergrößerung des Konverterkörpers 36 mit der Helixstruktur 58 ist zusätzlich in der Fig. 4 gezeigt. Die Helixstruktur 58 umfasst eine Mehrzahl von gleichartig aufgebauten, elektrisch leitenden Bändern 68, die die Achse A helixförmig bzw. wendelförmig umgeben. Die Helixstruktur 58 bzw. die Bänder 68 sind auf einem Körper 70 aus Kunststoff und/oder einem dielektrischen Material angeordnet, der den wesentlichen Anteil des Konverterkörpers 36 bereitstellt.

An seiner Eingangsseite 72 weist der Konverterkörper 36 ein konisches Ende 74 auf, das zum Zentrieren des Konverterkörpers 36 über der Bohrung 40 im Deckel 38 dient. In der Eingangsseite 72 des Konverterkörpers 36 befindet sich auch die Koaxialleitung 20, deren Innenleiter 46 noch ca. bis in die Hälfte der Helixstruktur 58 hineinragen kann.

Das konische Ende 74 des Konverterkörpers 36 weitet sich zu einem ersten zylinderförmigen Abschnitt 76 auf, auf dem die Helixstruktur 58 angeordnet ist.

Auf der Ausgangsseite 78 erweitert sich der Konverterkörper 36 in einen konischen Abschnitt 80, um dann wieder zylindrisch zu werden. Dieser zweite zylinderförmige Abschnitt 82 weist einen größeren Durchmesser als der erste zylinderförmige Abschnitt 76 auf.

Der konische Abschnitt 80 dient dabei als Druckabstützung gegen den Behälterdruck im Behälter 10. Die Öffnung 34 im Gehäuse 32 weist einen entsprechend konischen Abschnitt auf, um den konischen Abschnitt 80 aufzunehmen.

Der zweite zylindrische Abschnitt 82 wird zur Abdichtung benutzt. Der zweite zylindrische Abschnitt 82 weist zwei ringförmige Nuten 84 auf, die den Konverterkörper 36 in radialer Richtung umlaufen, in denen Dichtungen 86 angeordnet sind. Die Dichtungen 86 können zwei oder mehr O-Ringe aus beispielsweise FKM oder FFKM (Kalrez) sein.

Nach dem zweiten zylindrischen Abschnitt 82 verjüngt sich der Konverterkörper 36, wodurch ein Absatz 88 gebildet ist, der gegen das Antennenhorn 50 bzw. dessen Flansch 52 gestützt ist. Auf diese Weise wird ein Herausfallen beziehungsweise ein Herausziehen des Konverterkörpers 36 aus dem Gehäuse 32 durch ein Vakuum oder einen Unterdruck im Behälter 10 verhindert.

Nach der Verjüngung weist der Konverterkörper 36 eine Kegelspitze 90 auf, über die die H01-Welle in das Antennenhorn 50 ausgekoppelt wird.

Wie in den Fig. 5 bis 7 gezeigt ist, kann der Konverterkörper 36 mit der aufgebrachten Helixstruktur 58 einteilig, zweiteilig oder mehrteilig aufgebaut sein.

In der Fig. 5 ist gezeigt, dass die Helixstruktur 58 auf einem Rohr bzw. einem Hohlzylinder 92 aus einem ersten Material als Trägerkörper 94 aufgebracht sein kann. Das Rohr 92 ist dann auf einen weiteren Körper 96 aus einem zweiten Material aufgeschoben. Das Rohr 92 und der weitere Körper 96 bilden zusammen den dielektrischen Körper 70 des Konverterkörpers 36.

Beim ersten Material kann es sich dabei um ein LDS-fähiges Material, wie beispielsweise das Material "TECACOMP PEEK LDS" © der Fa. Ensinger, handeln. Beim zweiten Material kann es sich um ein Standard-PEEK, wie beispielsweise das "TECAPEEK Natur" © der Fa. Ensinger, handeln.

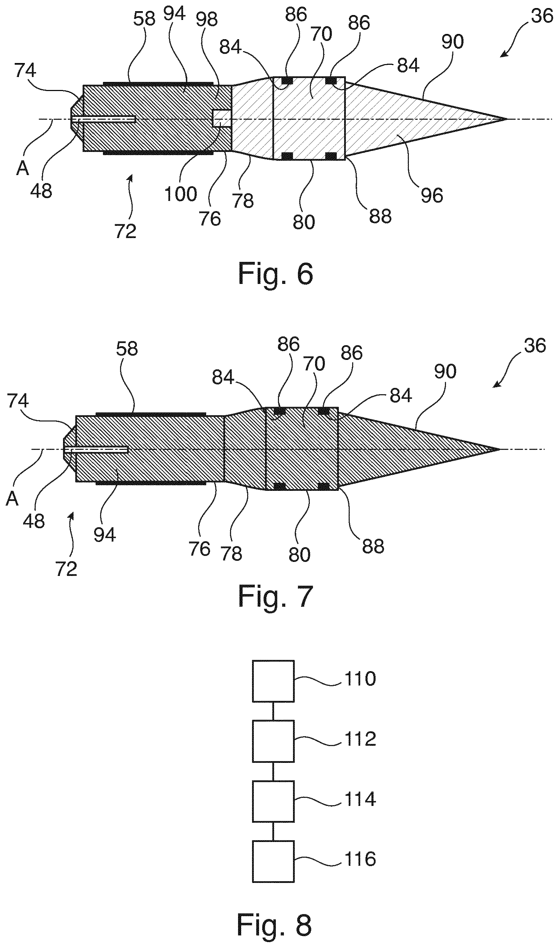

In der Fig. 6 ist gezeigt, dass die Helixstruktur 58 auf einem Vollzylinder 98 aus einem ersten Material als Trägerkörper 94 aufgebracht sein kann. Die gesamte Eingangsseite 72 des Konverterkörpers 36 mit der Helixstruktur 58 kann aus dem ersten Material gefertigt sein und beispielsweise über ein Gewinde 100 mit dem zweiten Körper 96 aus einem zweiten Material verbunden sein. Bei den Materialien kann es sich um die gleichen Materialien wie denen der Fig. 5 handeln.

Ein Vorteil eines zweiteiligen Aufbaus, der in den Fig. 5 und 6 gezeigt ist, kann darin bestehen, dass nur der Teil bzw. der Trägerkörper 94 mit der Helixstruktur 58 aus dem LDS-fähigen Material hergestellt werden muss und der restliche Teil bzw. der weitere Körper 96, also insbesondere der medienberührende Teil des Anpasskegels 90, aus einem in der Industrie bekannten und akzeptierten Material wie beispielsweise "PEEK natur" (ohne unbekannte Zusätze) oder PTFE aus einem Halbzeug günstig durch beispielsweise drehende Bearbeitung hergestellt werden kann.

In der Fig. 7 ist ein einstückiger Aufbau für den Konverterkörper 36 gezeigt, der gesamte Körper 70 des Konverterkörpers kann dabei aus dem gleichen Material wie etwa dem ersten Material aus den Fig. 5 und 6 gefertigt sein.

Die Fig. 8 zeigt ein Flussdiagramm für ein Verfahren, mit dem ein Konverterkörper 36 hergestellt werden kann.

Im Schritt 110 wird ein Trägerkörper 94 für die Helixstruktur bereitgestellt, beispielsweise kann der Trägerkörper 94 aus einem LDS-fähigen Material in der Form eines Hohlzylinders 92, eines Vollzylinders 98 oder des gesamten Konverterkörpers 36 gegossen werden. Auch eine spanende Bearbeitung aus einem Halbzeug ist möglich.

Im Schritt 112 wird die Helixstruktur 58 auf den Trägerkörper 94 durch Metallisierung aufgebracht. Beispielsweise kann die Helixstruktur 58 mit einem Laser auf einen Trägerkörper 94 aus LDS-fähigem Material vorgezeichnet werden und die helixförmigen Streifen 68 dann an den mit Laser vorbereiteten Stellen abgeschieden werden, beispielsweise in einem stromlosen chemischen Bad.

Falls der Trägerkörper 94 den gesamten dielektrischen Körper 70 des Konverterkörpers 36 bereitstellt, ist das Verfahren nach diesem Schritt beendet.

Andernfalls kann in einem weiteren Schritt 114 ein weiterer Kunststoffkörper 96 aus einem zweiten Material bereitgestellt werden. Beispielsweise kann der weitere Kunststoffkörper 96 aus einem Halbzeug aus dem zweiten Material durch spanende Bearbeitung hergestellt werden. Auch ein Gießen des weiteren Kunststoffkörper 96 aus dem zweiten Material ist möglich.

Im Schritt 116 wird dann der Trägerkörper an dem weiteren Kunststoffkörper 96 angebracht. Beispielsweise kann der Trägerkörper 94 ein Vollzylinder 98 sein und mit dem weiteren Kunststoffkörper 96 verschraubt werden. Es ist auch möglich, dass der Trägerkörper 94 ein Hohlzylinder 92 ist, und der Trägerkörper 92 auf den weiteren Kunststoffkörper 96 geschoben wird.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Modenkonverter (30) für ein Füllstandsradar (12), der Modenkonverter (30) umfassend:
eine Eingangsleitung (20) zum Einleiten eines Hochfrequenzsignals in den Modenkonverter, wobei die Eingangsleitung ein Koaxialkabel ist; eine Helixstruktur (58), in die ein Leiter (46) der Eingangsleitung (20) hineinragt und die eine Mehrzahl von helixförmigen elektrischen Leitern (68) aufweist, wobei der Leiter ein Innenleiter (46) des Koaxialkabels (20) ist;
einen Hohlleiter, der die Helixstruktur (58) umgibt;
wobei die Helixstruktur (58) dazu ausgeführt ist, das Hochfrequenzsignal aus der Eingangsleitung (46) in einen H01-Mode im Hohlleiter umzuwandeln.

2. Modenkonverter (30) nach Anspruch 1,
wobei der Leiter (46) um mehr als 10% der Länge der Helixstruktur (58) in die Helixstruktur (58) hineinragt.

3. Modenkonverter (30) nach einem der Ansprüche 1 oder 2,
wobei der Hohlleiter durch ein Gehäuse (32) des Füllstandsradars (12) gebildet ist.

4. Modenkonverter (30) nach einem der vorhergehenden Ansprüche,
wobei die Helixstruktur (58) von einem dielektrischen Körper (70) getragen wird, der im Hohlleiter angeordnet ist;
wobei der dielektrische Körper (70) die Helixstruktur (58) an seiner Außenseite trägt.

5. Füllstandsradar (12) mit einem Modenkonverter (30) nach einem der Ansprüche 1 bis 4.

6. Konverterkörper (36) für einen Modenkonverter (30) nach einem der Ansprüche 1 bis 4, der Konverterkörper (36) umfassend:
eine Helixstruktur (58) aus einer Mehrzahl von helixförmigen elektrischen Leitern (68);
einen dielektrischen Körper (70) mit einem zylinderförmigen Abschnitt (76), der von der Helixstruktur (58) umgeben ist;
eine Aufnahme (48) im zylinderförmigen Abschnitt (76) zur Aufnahme eines Innenleiters (46) eines Koaxialkabels (20).

7. Konverterkörper (36) nach Anspruch 6, weiter umfassend:
einen zweiten zylinderförmigen Abschnitt (82) mit einem größeren Durchmesser als der erste zylinderförmige Abschnitt (76), in das der erste zylinderförmige Abschnitt (76) mit der Helixstruktur (58) aufgenommen ist.

8. Konverterkörper (36) nach Anspruch 7, weiter umfassend:
einen konischen Abschnitt (80) zwischen dem ersten Abschnitt (76) und dem zweiten Abschnitt (82).

9. Konverterkörper (36) nach Anspruch 7 oder 8, weiter umfassend:
einen Abstrahlkegel (90), der derart an den zweiten zylinderförmigen Abschnitt (82) anschließt, dass am zweiten zylinderförmigen Abschnitt (82) ein Absatz (88) gebildet ist.

10. Verfahren zum Herstellen eines Konverterkörpers (36) nach einem der Ansprüche 6 bis 9, das Verfahren umfassend die Schritte:
Bereitstellen eines Trägerkörpers (94);
Aufbringen einer Helixstruktur (58) auf den Trägerkörper (94) durch Metallisierung einer Mehrzahl von helixförmigen Streifen (68) auf der Außenseite des Trägerkörpers (94).

11. Verfahren nach Anspruch 10,
wobei der Trägerkörper (94) aus einem Kunststoffmaterial gefertigt ist, das für eine Metallisierung mittels eines Laser-Direkt-Strukturierungsverfahrens geeignet ist.

12. Verfahren nach Anspruch 11,
wobei der gesamte Konverterkörper (36) aus dem Kunststoffmaterial gefertigt ist.

13. Verfahren nach Anspruch 10 oder 11, weiter umfassend den Schritt:
Anbringen des Trägerkörpers (94) an einem weiteren Kunststoffkörper (96), so dass der Trägerkörper (94) einen ersten Abschnitt (76) des Konverterkörpers (36) bildet, auf dem die Helixstruktur (58) aufgebracht ist und der weitere Kunststoffkörper (96) wenigstens einen zweiten Abschnitt (80) bildet, mit dem der Konverterkörper (36) an einem Gehäuse (32) befestigbar ist.

14. Verfahren nach Anspruch 13,
wobei der Trägerkörper (94) ein Vollzylinder (98) ist, so dass der Konverterkörper (36) im ersten Abschnitt im Inneren der Helixstruktur (58) lediglich das Kunststoffmaterial des Trägerkörpers aufweist; oder
wobei der Trägerkörper (94) ein Hohlzylinder (92) ist und der Trägerkörper dadurch an dem weiteren Kunststoffkörper (96) angebracht wird, indem er auf den weiteren Kunststoffkörper geschoben wird.

## Claims

1. A mode converter (30) for a level radar (12), the mode converter (30) comprising:
an input line (20) for introducing a high-frequency signal into the mode converter, wherein the input line is a coaxial cable;
a helix structure (58) into which a conductor (46) of the input line (20) projects and which comprises a plurality of helical electrical conductors (68), wherein the conductor is an internal conductor (46) of the coaxial cable (20) ;
a waveguide which encloses the helix structure (58);
wherein the helix structure (58) is designed to convert the high-frequency signal from the input line (46) into an H01 mode in the waveguide.

2. The mode converter (30) according to claim 1,
wherein the conductor (46) projects into the helix structure (58) by more than 10 % of the length of the helix structure (58).

3. The mode converter (30) according to claim 1 or 2,
wherein the waveguide is formed by a housing (32) of the level radar (12).

4. The mode converter (30) according to any of the preceding claims,
wherein the helix structure (58) is carried by a dielectric body (70) which is arranged in the waveguide;
wherein the dielectric body (70) carries the helix structure (58) on the outside thereof.

5. A level radar (12), comprising a mode converter (30) according to any of claims 1 to 4.

6. Converter body (36) for a mode converter (30) according to any of claims 1 to 4, the converter body (36) comprising:
a helix structure (58) comprising a plurality of helical electrical conductors (68);
a dielectric body (70) having a cylindrical portion (76) which is enclosed by the helix structure (58);
a socket (48) in the cylindrical portion (76) for receiving an internal conductor (46) of a coaxial cable (20).

7. Converter body (36) according to claim 6, further comprising:
a second cylindrical portion (82) having a greater diameter than the first cylindrical portion (76) in which the first cylindrical portion (76) comprising the helix structure (58) is received.

8. Converter body (36) according to claim 7, further comprising:
a conical portion (80) between the first portion (76) and the second potion (82).

9. Converter body (36) according to claim 7 or 8, further comprising:
an emission cone (90), which connects to the second cylindrical portion (82) in such a way that a shoulder (88) is formed on the second cylindrical portion (82).

10. Method for manufacturing a converter body (36) according to any of claims 6 to 9, the method comprising the steps of:
providing a carrier body (94);
applying a helix structure (58) to the carrier body (94) by metallising a plurality of helical strips (68) on the outside of the carrier body (94).

11. Method according to claim 10,
wherein the carrier body (94) is made of a plastics material which is suitable for metallization using a method of laser direct structuring.

12. Method according to claim 11,
wherein the entire converter body (36) is made of the plastics material.

13. Method according to claim 10 or 11, further comprising the step of:
attaching the carrier body (94) to a further plastics material body (96), in such a way that the carrier body (94) forms a first portion (76) of the converter body (36) to which the helix structure (58) is applied and the further plastics material body (96) forms at least a second portion (80) by which the converter body (36) can be fixed to a housing (32).

14. Method according to claim 13,
wherein the carrier body (94) is a solid cylinder (98), in such a way that the converter body (36) merely comprises the plastics material of the carrier body in the first portion in the interior of the helix structure (58); or
wherein the carrier body (94) is a hollow cylinder (92) and the carrier body is attached to the further plastics material body (96) by being slid onto the further plastics material body.

## Revendications

1. Convertisseur de mode (30) pour un radar de niveau de remplissage (12), le convertisseur de mode (20) comportant :
une ligne d'entrée (20) pour introduire un signal à haute fréquence dans le convertisseur de mode, la ligne d'entrée étant un câble coaxial,
une structure hélicoïdale (58) dans laquelle un conducteur (46) de la ligne d'entrée (20) fait saillie et comportant une pluralité de conducteurs électriques hélicoïdaux (68), le conducteur étant un conducteur intérieur (46) du câble coaxial (20),
un guide d'ondes entourant la structure hélicoïdale (58),
dans lequel la structure hélicoïdale (58) est configurée pour convertir le signal à haute fréquence provenant de la ligne d'entrée (46) en un mode H01 dans le guide d'ondes.

2. Convertisseur de mode (30) selon la revendication 1,
dans lequel le conducteur (46) fait saillie dans la structure hélicoïdale (58) de plus de 10 % de la longueur de la structure hélicoïdale (58).

3. Convertisseur de mode (30) selon l'une des revendications 1 ou 2,
dans lequel le guide d'ondes est formé par un boîtier (32) du radar de niveau de remplissage (12).

4. Convertisseur de mode (30) selon l'une des revendications précédentes,
dans lequel la structure hélicoïdale (58) est portée par un corps diélectrique (70) agencé dans le guide d'ondes,
dans lequel le corps diélectrique (70) supporte la structure hélicoïdale (58) sur son côté extérieur.

5. Radar de niveau de remplissage (12) ayant un convertisseur de mode (30) selon l'une des revendications 1 à 4.

6. Corps de convertisseur (36) pour un convertisseur de mode (30) selon l'une des revendications 1 à 4, le corps de convertisseur (36) comportant :
une structure hélicoïdale (58) constituée d'une pluralité de conducteurs électriques hélicoïdaux (68),
un corps diélectrique (70) pourvu d'une partie cylindrique (76), lequel est entouré par la structure hélicoïdale (58),
un logement (48) dans la partie cylindrique (76) pour recevoir un conducteur intérieur (46) d'un câble coaxial (20).

7. Corps de convertisseur (36) selon la revendication 6, comportant en outre :
une seconde partie cylindrique (82) ayant un diamètre plus grand que la première partie cylindrique (76) et dans laquelle est reçue la première partie cylindrique (76) pourvue de la structure hélicoïdale (58).

8. Corps de convertisseur (36) selon la revendication 7, comportant en outre :
une partie conique (80) entre la première partie (76) et la seconde partie (82).

9. Corps de convertisseur (36) selon la revendication 7 ou 8, comportant en outre :
un cône d'émission (90) accolé à la seconde partie cylindrique (82) de telle sorte qu'un épaulement (88) est formé sur la seconde partie cylindrique (82).

10. Procédé de fabrication d'un corps de convertisseur (36) selon l'une des revendications 6 à 9, le procédé comportant les étapes consistant à :
fournir un corps de support (94),
fixer une structure hélicoïdale (58) sur le corps de support (94) par métallisation d'une pluralité de bandes hélicoïdales (68) sur le côté extérieur du corps de support (94).

11. Procédé selon la revendication 10,
dans lequel le corps de support (94) est fabriqué à partir d'un matériau plastique adapté pour une métallisation au moyen d'un procédé de structuration directe par laser.

12. Procédé selon la revendication 11,
dans lequel la totalité du corps de convertisseur (86) est fabriquée en matériau plastique.

13. Procédé selon la revendication 10 ou 11, comportant en outre l'étape consistant à :
appliquer le corps de support (94) sur un autre corps en matériau plastique (96) de sorte que le corps de support (94) forme une première partie (76) du corps de convertisseur (36) sur laquelle la structure hélicoïdale (58) est appliquée, et que l'autre corps en matériau plastique (96) forme au moins une seconde partie (80) avec laquelle le corps de convertisseur (36) peut être fixé sur un boîtier (32).

14. Procédé selon la revendication 13,
dans lequel le corps de support (94) est un cylindre plein (98), de sorte que le corps de convertisseur (36) comporte le matériau plastique du corps de support uniquement dans la première partie à l'intérieur de la structure hélicoïdale (58), ou
dans lequel le corps de support (94) est un cylindre creux (92) et le corps de support est monté sur l'autre corps en matériau plastique (96), en le faisant coulisser sur l'autre corps en matériau plastique.
